# EUROPEAN PATENT SPECIFICATION

(11) **EP 4 763 622 B1**
(45) Date of publication and mention of the grant of the patent: **16.09.2026**
(21) Application number: 24383401.7
(22) Date of filing: 18.12.2024
(51) Int. Cl.: B60R 1/074

(54) **EXTERIOR REAR-VIEW MIRROR ASSEMBLY FOR A VEHICLE AND ASSEMBLY METHOD THEREOF**
AUSSENRÜCKSPIEGELANORDNUNG FÜR EIN FAHRZEUG UND MONTAGEVERFAHREN DAFÜR
ENSEMBLE RÉTROVISEUR EXTÉRIEUR POUR VÉHICULE ET SON PROCÉDÉ D'ASSEMBLAGE

(43) Date of publication of application: 24.06.2026
(60) Divisional application: 26192863.4 / 4 803 375
(73) Proprietor: Ficosa Automotive, S.L.U., 08232 Viladecavalls, Barcelona (ES)
(72) Inventor: BRAVO CORBACHO, David, 08232 Viladecavalls, Barcelona (ES); BIGGE, Andreas, 08232 Viladecavalls, Barcelona (ES)
(74) Representative: Balder IP Law, S.L.

(56) References cited:
- EP-A1- 4 238 826
- CN-U- 210 027 212

## Description

### TECHNICAL FIELD

The present invention relates to exterior rear-view mirror assemblies for vehicles.

An object of the invention is the provision of an exterior rear-view mirror assembly with an anti-finger pinch feature, which can be manufactured in a simplified manner and at a reduced cost compared with conventional designs.

### STATE OF THE ART

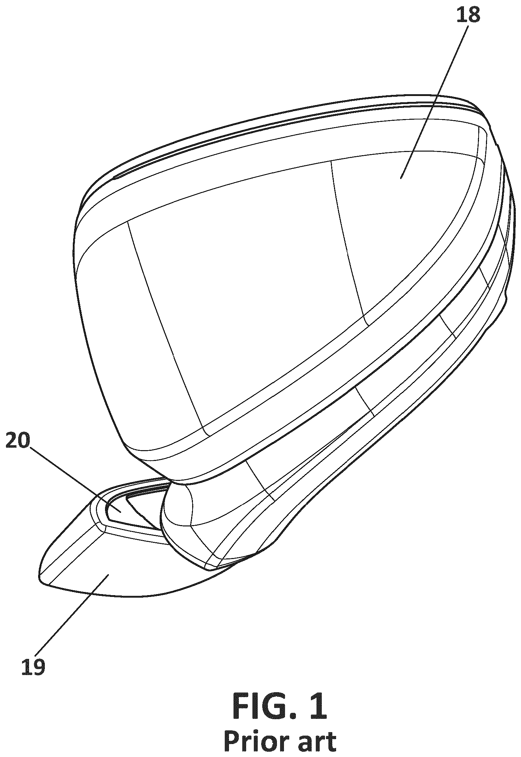

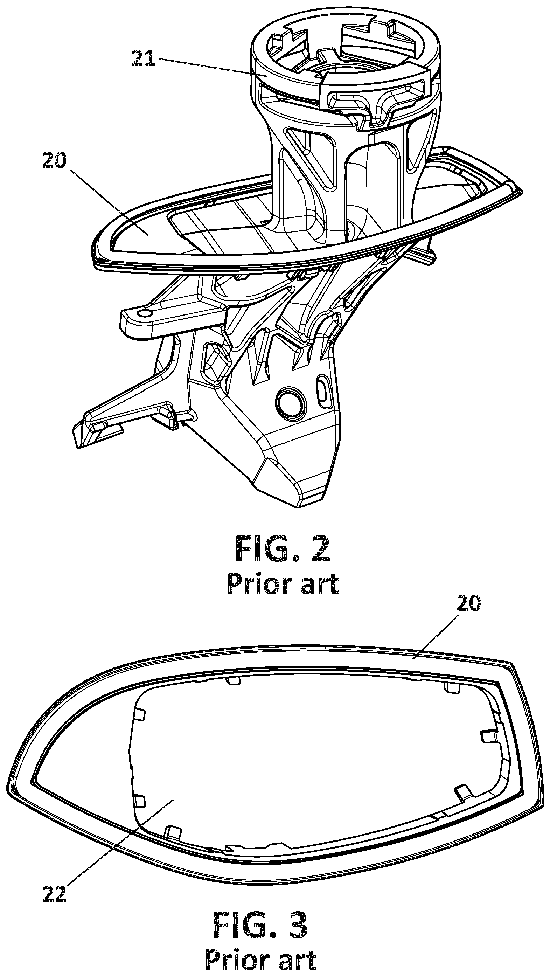

Conventional exterior rear-view mirror assemblies for vehicles as the one shown in **Figures 1** to **3****,** comprise: a base bracket (21) as a structural component of the assembly, a base cover (19) supported by the base bracket (21), a cover (20) attached to the base bracket (21), and a mirror head (18) which is rotatable from a parking position to a driving position relative to the base bracket (21). The cover (20) has an opening (22) at which the base bracket (21) is installed.

A known drawback of conventional exterior rear-view mirrors for vehicles, is that once the mirror head (18) folds to a parking position, some areas of the opening (22) are accessible, and there is a risk for users to get a finger pinched as there are gaps between the mirror head (18) and the base bracket (21), and dirt usually gets accumulated in those gaps deteriorating the proper operation of the assembly.

Other drawback is that the opening (22) of the cover (20) has a large size. compared with the size of the cover itself, so that the base bracket (21) typically made of metal, also has a large size to fit in the opening, therefore, conventional rear-view mirrors assemblies use large metal components.

The Chinese Utility Model CN210027212U discloses a sealing component for an outside rear-view mirror device. The sealing component is arranged at the upper end of the outside rear-view mirror base and located in a gap between the lower end of the outside rear-view mirror base and the upper end of the mirror cover, and the sealing component comprises an elastic barrier strip which obliquely extends upwards into the gap and abuts against the lower end of the mirror cover and a sealing ring with a horizontal section. The document CN21002721U shows the features of the preamble of claim 1.

The European patent publication EP-4238826 A1 refers to an exterior rearview mirror assembly for vehicles, the assembly comprising: a fixed part configured to be attached to an exterior part of a vehicle, a movable part mounted at the fixed part and rotatable relative to the fixed part about a first axis X1, and a mirror head comprising a mirror housing and a mirror reflective surface.

### DESCRIPTION OF THE INVENTION

The invention is defined in the attached independent claim 1 and satisfactorily solves the above-described drawbacks of the prior art, by the provision of an exterior rear-view mirror assembly for a vehicle, wherein the assembly conventionally comprises:
a base assembly having a first end and a second end, wherein the second end is adapted to be attached to the vehicle, in particular to a vehicle's bodywork, and
a mirror head which is rotatably attached to the first end of the base assembly, and wherein the mirror head is rotatable from a parking position to a driving position and vice versa.

Conventionally, the mirror head is fitted with a rear-view device, such as a camera, a Lidar or a combination of devices.

The base assembly further comprises:
a base bracket,
a base cover coupled to the base bracket and at least partially surrounding the base bracket, a cover having an opening and attached to the base bracket, such that the base bracket extends through the opening.

According to the invention, the shape and size of the opening is such that at least a 50% of the opening is concealed by the mirror head in its parking position and preferably also in its driving position, to prevent that a user's finger could get pinched into the opening of the cover. Furthermore, the cover is generally an elongated and flat body and the opening is off-centered, that is, the cover has a first end and a second end, and the opening is closer to the first end. In this way, the opening is placed below the mirror head in both positions parking and driving. The rear-view mirror assembly is configured such that when it is operatively installed on the vehicle, a first cover end towards which the opening is off-centered, is closer to the rear of the vehicle, than a second cover end, opposite to the first cover end.

The area of the opening is less than 75% of the total area of the cover, preferably less than 60% and more preferably less than 40%.

The cover is formed by a substrate and an elastic or flexible material applied on the substrate. The opening is formed in the substrate and the elastic or flexible material has been applied covering an entire perimetric area of the opening adjacent its edge, or it has been applied covering discrete areas of the opening adjacent its edge. In other words, both, the substrate and the elastic or flexible material are overlapped at least in some areas of the opening, such that the area of the resulting opening is smaller than the area of the substrate's opening.

The substrate has a first side and a second side, wherein the first side is closer to the mirror head than the second side. The elastic or flexible material is applied covering the whole surface of the first side or parts thereof, and preferably covering the perimetric edge of the substrate.

The base bracket is an elongated body having a first part placed below the cover and a second part placed above the cover, wherein the first part of the base bracket may be inclined with respect to the second part. The base bracket acts as a structural component of the assembly, as its second part is meant to be attached to the vehicle's bodywork, whereas its first part serves for the attachment and support of the mirror head. Preferably, the base bracket is made of a metal or a metal alloy.

A separation distance between the base bracket and an edge of the opening itself or the elastic or flexible material at the opening's edge, is less than 2 mm. With this arrangement, the elastic or flexible material serves as a sealing element closing any gap between the base bracket and the edge of the opening, thereby preventing any object or dirt to pass through the opening.

Additionally, the elastic or flexible material applied covering areas of the opening adjacent its edge, due to its elastic or flexible property, facilitates the assembly of the rear-view mirror by allowing the passage of the base bracket through the opening, even if some sections of the base bracket are larger than the cover's opening.

Preferably, the elastic or flexible material has been over moulded on the substrate, covering 4 the first side of the cover and sections of the perimetric edge of the cover or covering the entire perimeter of the cover.

The rear-view mirror assembly comprises first attaching means, formed at the second side of the substrate and located at the perimetric edge of the opening, wherein the first attaching means are configured to engage with the first part of the base bracket. The first attaching means and the substrate are formed in the same injection process.

Another aspect of the invention refers to a method for assembling an exterior rear-view mirror assembly with the features of independent claim 13.

The assembly method comprises the steps of:
providing a base bracket and a cover formed by a substrate having an opening and an elastic or flexible material applied on the substrate coving at least partially the opening, and
passing the base bracket through the opening by flexing the elastic or flexible material with the base bracket,
attaching the cover and the base bracket together,
providing a mirror head and attaching the mirror head to a part of the base bracket, such that mirror head is rotatable from a parking position to a driving position.

The opening has been formed in shape and size, such that at least 50% of the opening, is concealed by the mirror head, both in its parking and driving positions.

### BRIEF DESCRIPTION OF THE DRAWINGS

To complete the description and in order to provide a better understanding of the invention, a set of drawings is provided. These drawings illustrate embodiments of the invention, which should not be interpreted as restricting the scope of the invention, but just as examples of how the invention can be carried out. The drawings comprise the following figures:
Figure 1.- shows a perspective view of a rear-view mirror assembly according to the prior art.
Figure 2.- shows a perspective view of a base bracket and cover of the assembly of Figure 1.
Figure 3.- shows a bottom plan view of the cover shown in Figure 2.
Figure 4.- shows a perspective view of a rear-view mirror assembly according to the invention.
Figure 5.- shows an exploded view of the rear-view mirror of Figure 4.
Figure 6.- shows two perspective views of a base bracket and cover of the assembly of Figure 4, from above (Figure 6A) and from below (Figure 6B). Figure 6C is a top plan view of the base bracket and cover.
Figure 7.- shows a bottom plan view of the cover alone.
Figure 8.- shows a bottom plan view of the base cover, cover, and base bracket assembled together.
Figure 9.- shows: in Figure 9A a cross-section taken at plane A-A in Figure 8, in Figure 9B a cross-section taken at plane B-B in Figure 8, and in Figure 9C a cross-section taken at plane C-C in Figure 8.

### PREFERRED EMBODIMENTS OF THE INVENTION

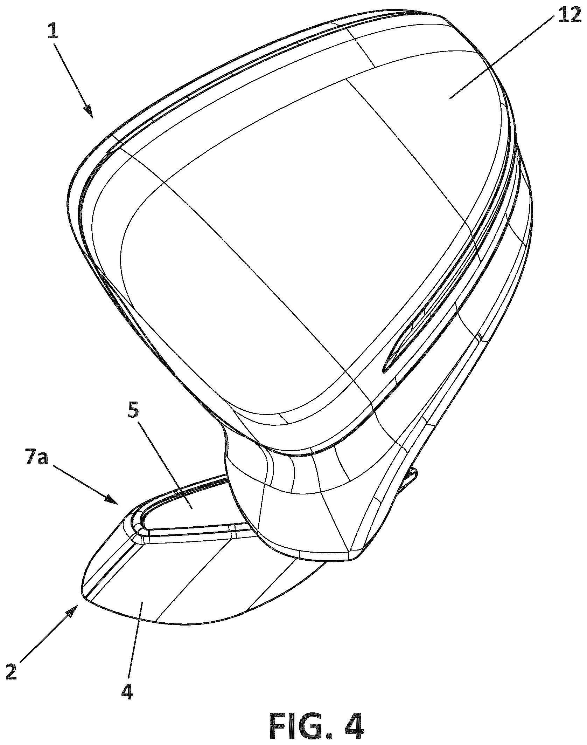

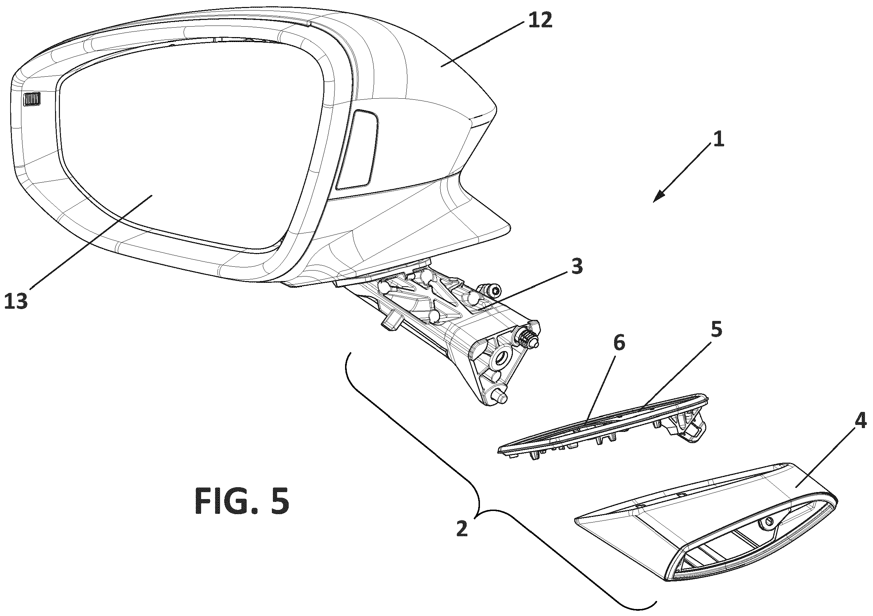

**Figures 4** and **5** show a preferred embodiment of a rear-view mirror assembly (1) according to the invention, which is formed by a stationary part and a movable part when the assembly is installed in a vehicle. The stationary part is a base assembly (2) which comprises: a base bracket (3), a base cover (4) configured as a sleeve and coupled to the base bracket (3), and a cover (5) also attached to the base bracket (3) and coupled to the base cover (4). The cover (5) has an opening (6) such that the base bracket (3) passes through the opening (6) and extends across the base cover (4).

The movable part of the assembly (1) is a mirror head (12) fitted with a mirror surface (13), wherein the mirror head (12) is rotatably attached to one end of the base bracket (3), such that the mirror head (12) is rotatable from a parking position to a driving position and vice versa. The mirror surface (13) may be fitted with a camera, and/or a Lidar device.

The shape and size of the opening (6) is such that at least 50% of the opening (6) is concealed by the mirror head (7) as shown specially in **Figure 4****,** both in its parking and driving positions, so that no objects can pass through the opening (6) from the exterior of the assembly (1).

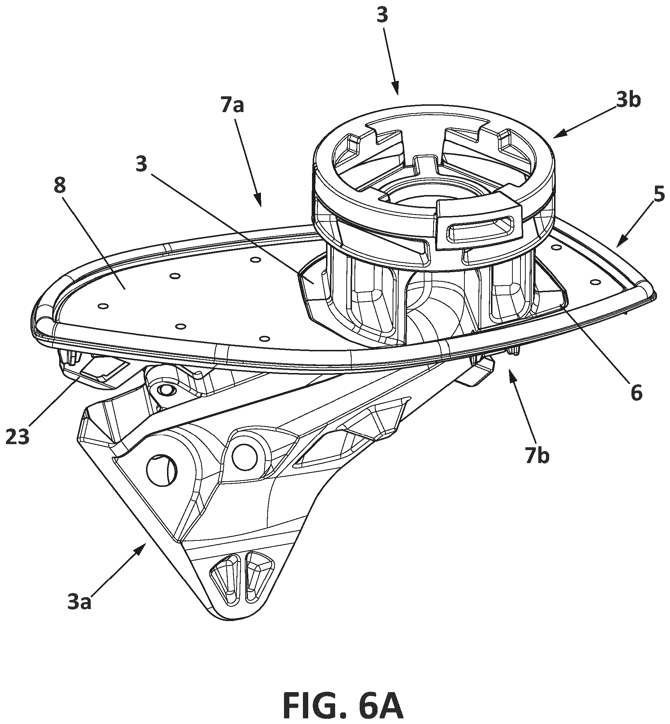

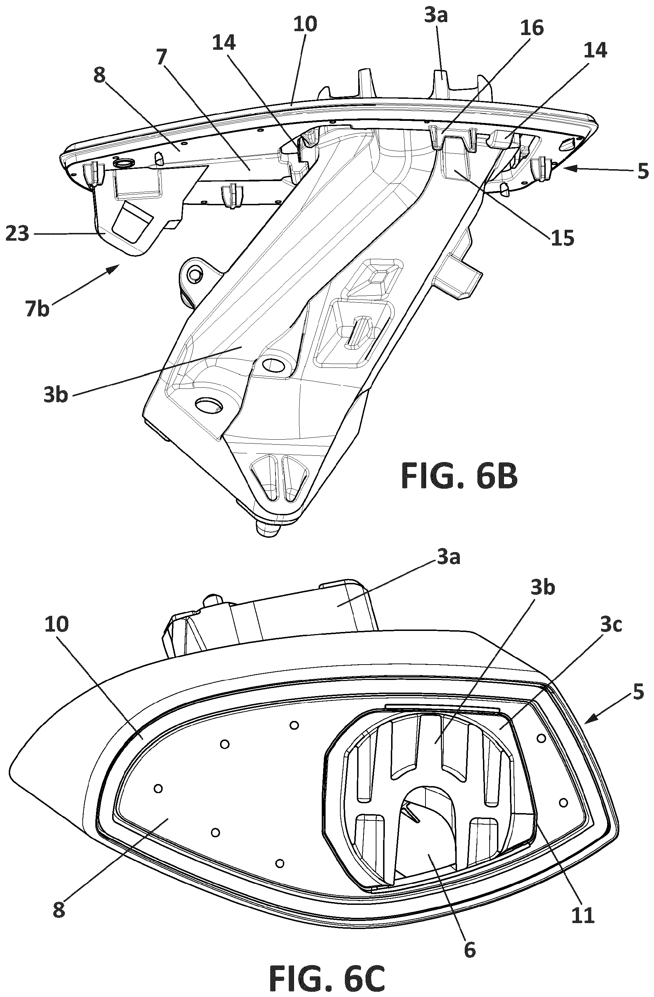

The coupling between the base bracket (3) and the cover (5) is shown in more detail in **Figures 6A** - **6C****.** The cover (5) is generally an elongated and flat body, and the opening (6) is off-centered. The cover (5) is formed by a substrate (7) and an elastic or flexible material (8) applied on the substrate (5), for example the elastic or flexible material (8) is over moulded on the substrate (7).

The substrate (7) has a first side (7a) and a second side (7b), wherein the first side (7a) is closer to the mirror head (12) than the second side (7b). The elastic or flexible material (8) is applied covering the whole surface of the first side (7a) and also covering the perimetric edge (10) of the substrate (7).

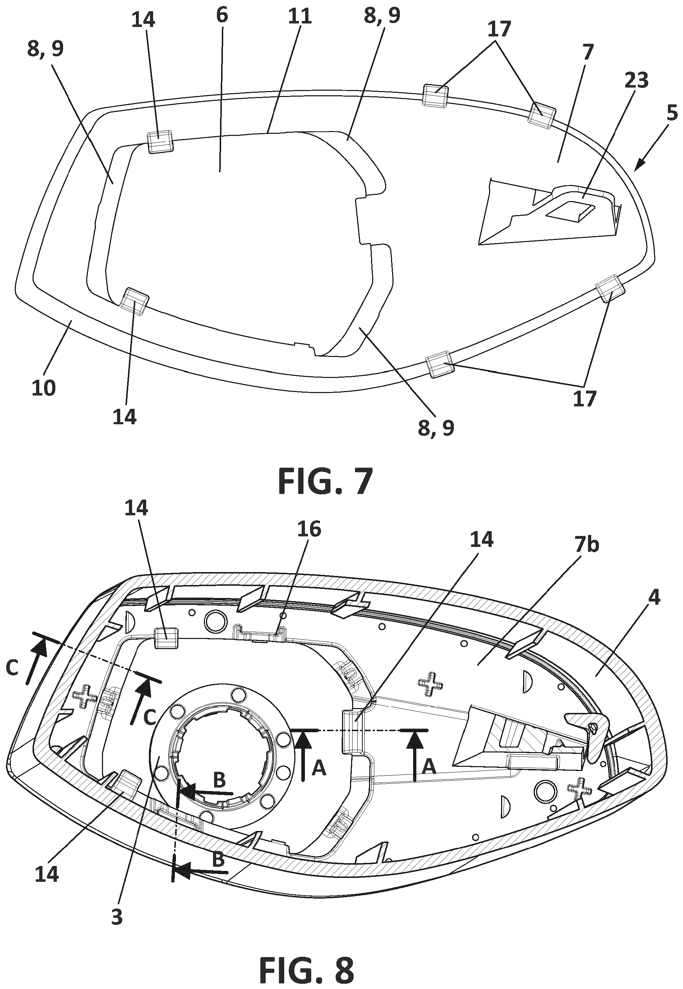

The opening (6) is formed in the substrate (7) and the elastic or flexible material (8) covers partially the opening (6). In the embodiment shown in the figures, especially in **Figure 7****,** the elastic or flexible material (8) is applied covering discrete areas (9) of the opening (6) adjacent its edge (11). In other words, both, the substrate and the elastic or flexible material are overlapped at least in some areas of the opening, such that the area of the resulting opening is smaller than the area of the substrate's opening.

This configuration of the substrate and the elastic or flexible material (8), makes possible the passage of the base bracket (3) through the openings by flexing the elastic or flexible material (8), even if some sections of the base bracket (3) are wider than the overlapped areas of both openings. Additionally, the base bracket (3) can be freely designed to have protrusions or irregularities, as required for its functionality.

The base bracket (3) which conventionally is made of a metal or a metal alloy, is also an elongated body having a first part (3a) placed below the cover (5), and a second part (3b) placed above the cover (5). The first and second parts (3a, 3b) of the base bracket (3) are inclined with respect to each other.

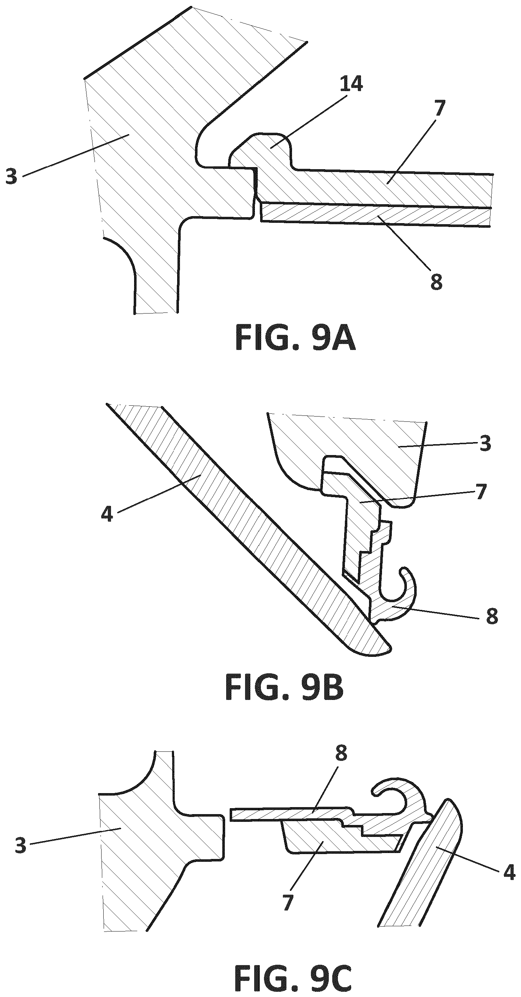

The base bracket (3) and the cover (5) are attached at the opening (6), and for that, the base bracket (3) has a collar (3c). Additionally, the cover (5) has first attaching means for its attachment with the base bracket (3), in particular in the embodiment shown in the figures, these first attaching means are embodied as internal clips or snaps (14) formed in the second side (7b) of the substrate (7) adjacent the opening (6) as it can be observed in **Figure 7****,** and configured to engage with the collar (3c) of the base bracket (3) as shown in **Figure 6B****,** and even with more detail in **Figure 9A****.**

Furthermore, the cover (5) has second attaching means for its attachment with the base cover (4), which are realized also as external clips (17) formed in the second side (7b) of the substrate (7) adjacent its external perimetric edge (10).

The base bracket (3) has a protrusion (15) integrally formed with its second part (3b), which contact with a stopper (16) also integrally formed with the substrate (7) at its second side (7b), such that the base bracket (3) is retained by its contact with the clips (14) and stopper (16).

As better shown in **Figure 6B****,** the contour of the opening of the elastic or flexible material (8), generally match the shape of the collar (3c) of the base bracket (3), thereby closing or reducing any gap between base bracket (3) and the cover (5), but at the same time, due to the elasticity or flexibility of the elastic or flexible material (8), allowing the base bracket to pass through the opening (6) during the assembly process of the same, thereby facilitating the assembly process. The assembly (1) is configured, such that a separation distance between the base bracket (3) and an edge (11) of the opening (6) or the separation distance between the base bracket (3) and the parts of the elastic or flexible material (8) covering the opening (6), is less than 2 mm.

In the assembly method of the invention, for coupling the base bracket (3) with the cover (5), the first part (3a) of the base bracket (3) is moved from the second side (7b) of the substrate (7) through the opening (6), until it gets engaged by the clips (14) and the protrusion (15) makes contact with the stopper (16).

As shown in Figures **6A** and **6B****,** a side bracket (23) is formed in the second side (7b) of the substrate (7), for its attachment with the base bracket (3) or to the base cover (4), for example by means of a connection member (not shown), in order to provide an additional attachment between said components to avoid vibrations.

## Claims

1. Exterior rear-view mirror assembly (1) for a vehicle, comprising:
a base assembly (2) having a first end and a second end, wherein the second end is adapted to be attached to the vehicle,
wherein the base assembly (2) comprises:
a base bracket (3),
a base cover (4) coupled to the base bracket (3) and at least partially surrounding the base bracket (3),
a cover (5) having an opening (6) and attached to the base bracket (3), such that the base bracket (3) extends through the opening (6),
the rear-view mirror assembly (1) further comprising a mirror head (12) rotatably attached to the first end of the base assembly (2), and wherein the mirror head (12) is rotatable from a parking position to a driving position,
wherein
the shape and size of the opening (6) is such that at least 50% of the opening (6), is concealed by the mirror head (12), both in its parking and driving positions, **characterised in that**
the cover (5) is formed by a substrate (7) and an elastic or flexible material (8) is applied on the substrate (7), wherein the opening (6) is formed in the substrate (7) and the elastic or flexible material (8) covers at least partially the opening (6).

2. A rear-view mirror assembly according to claim 1, wherein the area of the opening (6) is less than 75% of the total area of the cover (5), preferably less than 60% and more preferably less than 40%

3. A rear-view mirror assembly according to any of the preceding claims, wherein the cover (5) is generally an elongated and flat body, and wherein the opening (6) is off-centered.

4. A rear-view mirror assembly according to claim 3, configured such that when the rear-view mirror assembly (1) is operatively installed on the vehicle, a first cover end towards which the opening is off-centered, is closer to the rear of the vehicle, than a second cover end, opposite to the first cover end.

5. A rear-view mirror assembly according to claim 1, wherein the elastic or flexible material (8) is applied covering an entire perimetric area of the opening (6) adjacent its edge (11), or it is applied covering discrete areas of the opening (6) adjacent its edge (11).

6. A rear-view mirror assembly according to claims 1 to 5, wherein the substrate (7) has a first side (7a) and a second side (7b), wherein the first side (7a) is closer to the mirror head (12) than the second side (7b), and wherein the elastic or flexible material (8) is applied covering the whole surface of the first side (7a) or parts thereof, preferably covering the perimetric edge (10) of the substrate (7).

7. A rear-view mirror assembly according to any of the claims 1 to 6, wherein the base bracket (3) is an elongated body, and wherein a first part (3b) of the base bracket is placed below the cover (5) and a second part (3a) is placed above the cover (5), and wherein a separation distance between the base bracket (3) and an edge of the elastic or flexible material at the opening, is less than 2 mm.

8. A rear-view mirror assembly according to claim 7, wherein the first part (3a) of the base bracket (3) is inclined with respect to the second part (3b).

9. A rear-view mirror assembly according to any of the claims 1 to 8, wherein the elastic or flexible material (8) has been over moulded on the substrate (7), covering the first side of the cover and sections of the perimetric edge of the cover or covering the entire perimeter of the cover.

10. A rear-view mirror assembly according to any of the preceding claims, wherein the base bracket (3) is made of a metal or a metal alloy.

11. A rear-view mirror assembly according to any of the claims 1 to 10, further comprising first attaching means formed at the second side of the substrate and located at the perimetric edge of the opening, wherein the first attaching means are configured to engage with the first part of the base bracket.

12. A rear-view mirror assembly according to any of the claims 1 to 11, further comprising second attaching means (17) formed at the second side of the substrate (7) and located at the perimetric edge (10) of the substrate (7), wherein the second first attaching means are configured to engage with the base cover (4).

13. Method for assembling the exterior rear-view mirror assembly of any of the preceding claims, the method comprising the steps of:
providing a base bracket (3) and a cover (5) formed by a substrate (7) having an opening (6) and an elastic or flexible material (8) applied on the substrate (7) coving at least partially the opening (6), and
passing the base bracket (3) through the opening (6) by flexing the elastic or flexible material (8) with the base bracket (3),
attaching the cover (5) and the base bracket (3) together,
providing a mirror head (12) and attaching the mirror head (12) to a part of the base bracket (3), such that mirror head (12) is rotatable from a parking position to a driving position, and
wherein the opening (6) has been formed in shape and size, such that at least 50% of the opening (6) is concealed by the mirror head (12), both in its parking and driving positions.

## Patentansprüche

1. Außenrückspiegelanordnung (1) für ein Fahrzeug, umfassend:
eine Basisbaugruppe (2) mit einem ersten Ende und einem zweiten Ende, wobei das zweite Ende zur Befestigung am Fahrzeug ausgelegt ist,
wobei die Basisbaugruppe (2) umfasst:
eine Basishalterung (3),
eine Basisabdeckung (4), die mit der Basishalterung (3) verbunden ist und die Basishalterung (3) zumindest teilweise umgibt,
eine Abdeckung (5) mit einer Öffnung (6), die an der Basishalterung (3) befestigt ist, sodass sich die Basishalterung (3) durch die Öffnung (6) erstreckt,
wobei die Rückspiegelanordnung (1) ferner einen Spiegelkopf (12) umfasst, der drehbar am ersten Ende der Basisbaugruppe (2) befestigt ist, und wobei der Spiegelkopf (12) von einer Parkposition in eine Fahrposition drehbar ist,
wobei die Form und Größe der Öffnung (6) so beschaffen ist, dass mindestens 50 % der Öffnung (6) vom Spiegelkopf (12) verdeckt werden, sowohl in ihrer Park- als auch in ihrer Fahrposition, **dadurch gekennzeichnet, dass**
die Abdeckung (5) aus einem Substrat (7) gebildet ist und ein elastisches oder flexibles Material (8) auf das Substrat (7) aufgebracht ist, wobei die Öffnung (6) in dem Substrat (7) ausgebildet ist und das elastische oder flexible Material (8) die Öffnung (6) zumindest teilweise bedeckt.

2. Rückspiegelanordnung nach Anspruch 1, wobei die Fläche der Öffnung (6) weniger als 75 % der Gesamtfläche der Abdeckung (5) beträgt, vorzugsweise weniger als 60 % und noch bevorzugter weniger als 40 %.

3. Rückspiegelanordnung nach einem der vorstehenden Ansprüche, wobei die Abdeckung (5) im Allgemeinen ein länglicher und flacher Körper ist und wobei die Öffnung (6) außermittig angeordnet ist.

4. Rückspiegelanordnung nach Anspruch 3, die so ausgebildet ist, dass, wenn die Rückspiegelanordnung (1) funktionsfähig am Fahrzeug angebracht ist, ein erstes Ende der Abdeckung, zu dem hin die Öffnung außermittig angeordnet ist, näher am Heck des Fahrzeugs liegt als ein zweites Ende der Abdeckung, das dem ersten Ende gegenüberliegt.

5. Rückspiegelanordnung nach Anspruch 1, wobei das elastische oder flexible Material (8) so aufgebracht ist, dass es entweder den gesamten Umfangsbereich der Öffnung (6) angrenzend an deren Rand (11) bedeckt oder einzelne Bereiche der Öffnung (6) angrenzend an deren Rand (11) bedeckt.

6. Rückspiegelanordnung nach den Ansprüchen 1 bis 5, wobei das Substrat (7) eine erste Seite (7a) und eine zweite Seite (7b) aufweist, wobei die erste Seite (7a) näher am Spiegelkopf (12) liegt als die zweite Seite (7b), und wobei das elastische oder flexible Material (8) so aufgebracht ist, dass es die gesamte Oberfläche der ersten Seite (7a) oder Teile davon bedeckt, vorzugsweise den Umfangsrand (10) des Substrats (7).

7. Rückspiegelanordnung nach einem der Ansprüche 1 bis 6, wobei die Basishalterung (3) ein länglicher Körper ist und wobei ein erster Teil (3b) der Basishalterung unterhalb der Abdeckung (5) und ein zweiter Teil (3a) oberhalb der Abdeckung (5) angeordnet ist, und wobei ein Abstand zwischen der Basishalterung (3) und einem Rand des elastischen oder flexiblen Materials an der Öffnung weniger als 2 mm beträgt.

8. Rückspiegelanordnung nach Anspruch 7, wobei der erste Teil (3a) der Basishalterung (3) gegenüber dem zweiten Teil (3b) geneigt ist.

9. Rückspiegelanordnung nach einem der Ansprüche 1 bis 8, wobei das elastische oder flexible Material (8) auf das Substrat (7) aufgespritzt wurde und dabei die erste Seite der Abdeckung sowie Abschnitte des Umfangsrands der Abdeckung bedeckt oder den gesamten Umfang der Abdeckung bedeckt.

10. Rückspiegelanordnung nach einem der vorstehenden Ansprüche, wobei die Basishalterung (3) aus einem Metall oder einer Metalllegierung besteht.

11. Rückspiegelanordnung nach einem der Ansprüche 1 bis 10, die ferner erste Befestigungsmittel umfasst, die an der zweiten Seite des Substrats ausgebildet und am Umfangsrand der Öffnung angeordnet sind, wobei die ersten Befestigungsmittel so konfiguriert sind, dass sie mit dem ersten Teil der Basishalterung in Eingriff kommen.

12. Rückspiegelanordnung nach einem der Ansprüche 1 bis 11, die ferner zweite Befestigungsmittel (17) umfasst, die an der zweiten Seite des Substrats (7) ausgebildet und am Umfangsrand (10) des Substrats (7) angeordnet sind, wobei die zweiten Befestigungsmittel so ausgebildet sind, dass sie mit der Basisabdeckung (4) in Eingriff kommen.

13. Verfahren zum Zusammenbau der Außenrückspiegelanordnung nach einem der vorstehenden Ansprüche, wobei das Verfahren die folgenden Schritte umfasst:
Bereitstellen einer Basishalterung (3) und einer Abdeckung (5), die aus einem Substrat (7) mit einer Öffnung (6) gebildet ist, und eines elastischen oder flexiblen Materials (8), das auf das Substrat (7) aufgebracht ist und die Öffnung (6) zumindest teilweise überdeckt,
Durchführen der Basishalterung (3) durch die Öffnung (6) durch Biegen des elastischen oder flexiblen Materials (8) zusammen mit der Basishalterung (3),
Verbinden der Abdeckung (5) und der Basishalterung (3) miteinander,
Bereitstellen eines Spiegelkopfes (12) und Befestigen des Spiegelkopfes (12) an einem Teil der Basishalterung (3), sodass der Spiegelkopf (12) von einer Parkposition in eine Fahrposition drehbar ist, und
wobei die Öffnung (6) in Form und Größe so ausgebildet ist, dass mindestens 50 % der Öffnung (6) sowohl in ihrer Park- als auch in ihrer Fahrposition durch den Spiegelkopf (12) verdeckt sind.

## Revendications

1. Ensemble de rétroviseur extérieur (1) pour un véhicule comprenant :
un ensemble de base (2) ayant une première extrémité et une seconde extrémité, dans lequel la seconde extrémité est adaptée pour être fixée au véhicule,
dans lequel l'ensemble de base (2) comprend :
un support de base (3),
un couvercle de base (4) couplé au support de base (3) et entourant au moins partiellement le support de base (3),
un couvercle (5) ayant une ouverture (6) et fixé au support de base (3), de sorte que le support de base (3) s'étend à travers l'ouverture (6),
l'ensemble de rétroviseur (1) comprenant en outre une tête de miroir (12) fixée, de manière rotative, à la première extrémité de l'ensemble de base (2) et dans lequel la tête de miroir (12) peut tourner d'une position de stationnement à une position de conduite,
dans lequel :
la forme et la taille de l'ouverture (6) sont telles qu'au moins 50% de l'ouverture (6), est dissimulé par la tête de miroir (12), à la fois dans ses positions de stationnement et de conduite, **caractérisé en ce que** :
le couvercle (5) est formé par un substrat (7) et un matériau élastique ou flexible (8) est appliqué sur le substrat (7), dans lequel l'ouverture (6) est formée dans le substrat (7) et le matériau élastique ou flexible (8) recouvre au moins partiellement l'ouverture (6).

2. Ensemble de rétroviseur selon la revendication 1, dans lequel la surface de l'ouverture (6) représente moins de 75% de la surface totale du couvercle (5), de préférence moins de 60% et encore de préférence moins de 40%.

3. Ensemble de rétroviseur selon l'une quelconque des revendications précédentes, dans lequel le couvercle (5) est généralement un corps allongé et plat, et dans lequel l'ouverture (6) est décentrée.

4. Ensemble de rétroviseur selon la revendication 3, configuré de sorte que lorsque l'ensemble de rétroviseur (1) est installé, de manière opérationnelle, sur le véhicule, une première extrémité de couvercle vers laquelle l'ouverture est décentrée, est plus proche de l'arrière du véhicule, qu'une seconde extrémité de couvercle, opposée à la première extrémité de couvercle.

5. Ensemble de rétroviseur selon la revendication 1, dans lequel le matériau élastique ou flexible (8) est appliqué, recouvrant toute une surface périphérique de l'ouverture (6) adjacente à son bord (11) ou est appliqué, recouvrant des surfaces discrètes de l'ouverture (6) adjacente à son bord (11).

6. Ensemble de rétroviseur selon les revendications 1 à 5, dans lequel le substrat (7) a un premier côté (7a) et un second côté (7b), dans lequel le premier côté (7a) est plus proche de la tête de miroir (12) que le second côté (7b), et dans lequel le matériau élastique ou flexible (8) est appliqué, recouvrant toute la surface du premier côté (7a) ou des parties de ce dernier, de préférence recouvrant le bord périphérique (10) du substrat (7).

7. Ensemble de rétroviseur selon l'une quelconque des revendications 1 à 6, dans lequel le support de base (3) est un corps allongé, et dans lequel une première partie (3b) du support de base est placée sous le couvercle (5) et une seconde partie (3a) est placée au-dessus du couvercle (5) et dans lequel une distance de séparation entre le support de base (3) et un bord du matériau élastique ou flexible au niveau de l'ouverture, est inférieure à 2 mm.

8. Ensemble de rétroviseur selon la revendication 7, dans lequel la première partie (3a) du support de base (3) est inclinée par rapport à la seconde partie (3b).

9. Ensemble de rétroviseur selon l'une quelconque des revendications 1 à 8, dans lequel le matériau élastique ou flexible (8) a été surmoulé sur le substrat (7), recouvrant le premier côté du couvercle et des sections du bord périphérique du couvercle ou recouvrant tout le périmètre du couvercle.

10. Ensemble de rétroviseur selon l'une quelconque des revendications précédentes, dans lequel le support de base (3) est réalisé à partir d'un métal ou d'un alliage métallique.

11. Ensemble de rétroviseur selon l'une quelconque des revendications 1 à 10, comprenant en outre des premiers moyens de fixation formés au niveau du second côté du substrat et positionnés au niveau du bord périphérique de l'ouverture, dans lequel les premiers moyens de fixation sont configurés pour se mettre en prise avec la première partie du support de base.

12. Ensemble de rétroviseur selon l'une quelconque des revendications 1 à 11, comprenant en outre des seconds moyens de fixation (17) formés au niveau du second côté du substrat (7) et positionnés au niveau du bord périphérique (10) du substrat (7), dans lequel les seconds premiers moyens de fixation sont configurés pour se mettre en prise avec le couvercle de base (4).

13. Méthode pour assembler l'ensemble de rétroviseur extérieur selon l'une quelconque des revendications précédentes, la méthode comprenant les étapes consistant à :
prévoir un support de base (3) et un couvercle (5) formé par un substrat (7) ayant une ouverture (6) et un matériau élastique ou flexible (8) appliqué sur le substrat (7) recouvrant au moins partiellement l'ouverture (6), et
faire passer le support de base (3) à travers l'ouverture (6) en fléchissant le matériau élastique ou flexible (8) avec le support de base (3),
fixer le couvercle (5) et le support de base (3) ensemble,
prévoir une tête de miroir (12) et fixer la tête de miroir (12) sur une partie du support de base (3), de sorte que la tête de miroir (12) peut tourner d'une position de stationnement à une position de conduite, et
dans laquelle l'ouverture (6) a été formée selon une forme et une taille, de sorte qu'au moins 50% de l'ouverture (6) est dissimulé par la tête de miroir (12), à la fois dans ses positions de stationnement et de conduite.
